# EUROPEAN PATENT SPECIFICATION

(11) **EP 3 141 370 B1**
(45) Date of publication and mention of the grant of the patent: **24.05.2023**
(21) Application number: 16187402.9
(22) Date of filing: 06.09.2016
(51) Int. Cl.: B29C 44/12, E04B 1/80, B29C 44/44, C08J 9/228, F16L 59/065, F24H 1/18, B29K 23/00, B29K 25/00, B29C 44/04, B29C 44/06, B29C 44/08, B29C 44/34

(54) **METHOD FOR PRODUCING COMPOSITE THERMAL INSULATOR, METHOD FOR PRODUCING WATER HEATER, AND COMPOSITE THERMAL INSULATOR**
VERFAHREN ZUR HERSTELLUNG EINES VERBUNDWÄRMEISOLATORS, VERFAHREN ZUR HERSTELLUNG EINES WASSERHEIZERS UND VERBUNDWÄRMEISOLATOR
PROCÉDÉ DE FABRICATION D'UN ISOLATEUR THERMIQUE COMPOSITE, PROCÉDÉ DE FABRICATION D'UN CHAUFFE-EAU ET ISOLATEUR THERMIQUE COMPOSITE

(30) Priority: 11.09.2015 JP 2015179116; 06.07.2016 JP 2016134506
(43) Date of publication of application: 15.03.2017
(73) Proprietor: Mitsubishi Electric Corporation, Chiyoda-ku Tokyo 100-8310 (JP)
(72) Inventor: YAJI, Yoshikazu, Chiyoda-ku, Tokyo 100-8310 (JP); SHINOKI, Toshio, Chiyoda-ku, Tokyo 100-8310 (JP); SUZUKI, Shunkei, Chiyoda-ku, Tokyo 100-8310 (JP); KOIDE, Toru, Chiyoda-ku, Tokyo 100-8310 (JP)
(74) Representative: Meissner Bolte Partnerschaft mbB

(56) References cited:
- EP-A1- 2 540 925
- EP-A1- 2 660 406
- EP-A1- 2 746 482
- EP-A2- 1 544 367
- WO-A1-2014/118741

## Description

### Technical Field

The present invention relates to a method for producing a composite thermal insulator formed by combining a vacuum thermal insulator and a heat insulating foam and a method for producing a water heater to which the composite thermal insulator is applied, as well as to the composite thermal insulator.

### Background Art

Conventional composite thermal insulators have been disclosed, including, for example, one made up of a vacuum thermal insulator and expanded polystyrene, where the vacuum thermal insulator is produced by covering a core with a laminate-film covering material and vacuum-sealing the inside of the covering material.

The composite thermal insulator is produced by foaming material of the expanded polystyrene around the vacuum thermal insulator, covering the vacuum thermal insulator with the expanded polystyrene, and thereby unifying the vacuum thermal insulator and the expanded polystyrene (see, for example, Patent Literature 1).

Also, the conventional composite thermal insulators that have been disclosed include, for example, one comprising a first thermal insulation board made of a substantially rectangular first thermal insulator having high thermal insulation performance and a second thermal insulator having thermal insulation performance lower than the first thermal insulator, wherein the first thermal insulation board is formed by placing the second thermal insulator on an outer periphery of the first thermal insulator and covering both sides of the first heat insulating board with sheets (see, for example, Patent Literature 2).
Patent Literature 3 relates to a heat-insulating panel for use in buildings that has a basic structure obtained by covering the entirety of a flat plate-shaped vacuum-insulation material with a heat-insulation material. In addition, the heat-insulating panel for use in buildings is provided with a latent heat storage material that is arranged substantially in a frame-like shape extending from one main surface of the vacuum-insulation material, wrapping around the sidewall thereof, and connecting to the other main surface thereof, so as to cover the entire peripheral edge of the vacuum-insulation material. The latent heat storage material is provided to use latent heat to mitigate heat bridging that results from heat leakage between high temperature and low temperature parts in the vacuum-insulation material under usage conditions that undergo changes in temperature. The heat-insulation material is arranged in such a manner that the heat-insulation material covers the entire surface of the latent heat storage material and the entire exposed surface of the vacuum-insulation material.

### List of Citations

### Patent Literature

Patent Literature 1: Japanese Unexamined Patent Application Publication JP 2006-118 635 A
Patent Literature 2: Japanese Unexamined Patent Application Publication JP 2007-122 316 A
Patent Literature 3: EP 2 540 925 A1

### Summary of Invention

### Technical Problem

In forming a heat insulating foam configured to cover vacuum thermal insulator, production methods for such composite thermal insulators foam preforming beads through heating and pressurization, for example, with steam and then form the heat insulating foam. Because edges, i.e., outer peripheral portions, of the vacuum thermal insulator have a higher gas permeability than other parts, if a periphery of the vacuum thermal insulator is heated and pressurized in forming the heat insulating foam, gas permeation from the edges of the vacuum thermal insulator to inside is facilitated. Therefore, there is a problem in that the thermal insulation performance of the vacuum thermal insulator is degraded.

Also, in a configuration in which the heat insulating foam foamed in advance is fitted around a vacuum thermal insulator and the whole is covered with a sheet, a gap is formed between the vacuum thermal insulator and the heat insulating foam produced in advance, so the composite thermal insulators are not fixed sufficiently by merely being covered with a sheet, which may result in a lack of unity.

The present invention has been made to overcome the above problems and has an object to provide a method for producing a composite thermal insulator, a method for producing a water heater, and the composite thermal insulator which can limit degradation of the thermal insulation performance of the vacuum thermal insulator more efficiently than the conventional techniques, achieving improved integrity.

### Solution to the Problem

According to the invention, the problem is solved by the subject-matter outlined in the independent claims. Advantageous further developments of the invention are set forth in the dependent claims.
According to an embodiment of the present invention, there is provided a method for producing a composite thermal insulator including a vacuum thermal insulator, the vacuum thermal insulator comprising a core and an enclosure configured to wrap the core and include a weld portion which extends along an outer periphery of the core and at which portions of the enclosure are welded together, the vacuum thermal insulator having vacuum-sealed inside, the method comprising: a first step of covering edges of the vacuum thermal insulator including the weld portion with a first heat insulating foam foamed in advance and placing the first heat insulating foam along the outer periphery of the core; and a second step of forming a second heat insulating foam configured to cover the first heat insulating foam placed in the first step and at least part of the vacuum thermal insulator.

Also, according to an embodiment of the present invention, there is provided a method for producing a water heater using a composite thermal insulator including a vacuum thermal insulator, the vacuum thermal insulator comprising a core and an enclosure configured to wrap the core and include a weld portion which extends along an outer periphery of the core and at which portions of the enclosure are welded together, the vacuum thermal insulator having vacuum-sealed inside, the method comprising: a step of placing the composite thermal insulator around a tank configured to store hot water, where the composite thermal insulator is produced in a first step of covering edges of the vacuum thermal insulator including the weld portion with a first heat insulating foam foamed in advance and placing the first heat insulating foam along the outer periphery of the core and a second step of forming a second heat insulating foam configured to cover the first heat insulating foam placed in the first step and at least part of the vacuum thermal insulator.

Also, according to an embodiment of the present invention, there is provided a method for producing a water heater using a composite thermal insulator including a vacuum thermal insulator, the vacuum thermal insulator comprising a core and an enclosure configured to wrap the core and include a weld portion which extends along an outer periphery of the core and at which portions of the enclosure are welded together, the vacuum thermal insulator having vacuum-sealed inside, the method comprising: a step of placing the composite thermal insulator around a compressor configured to discharge refrigerant where the composite thermal insulator is produced in a first step of covering edges of the vacuum thermal insulator including the weld portion with a first heat insulating foam foamed in advance and placing the first heat insulating foam along the outer periphery of the core and a second step of forming a second heat insulating foam configured to cover the first heat insulating foam placed in the first step and at least part of the vacuum thermal insulator.

Also, according to an embodiment of the present invention, there is provided a composite thermal insulator configured to perform thermal insulation using a plate-shaped vacuum thermal insulator having vacuum-sealed inside, comprising: a first heat insulating foam made of a first foamable material and placed on an outer periphery of the vacuum thermal insulator; and a second heat insulating foam made of a second foamable material and configured to couple together the first heat insulating foam and the vacuum thermal insulator, wherein the second heat insulating foam covers the first heat insulating foam and at least part of the vacuum thermal insulator.

### Advantageous Effects of the Invention

The method for producing a composite thermal insulator, the method for producing a water heater, and the composite thermal insulator according to embodiments of the present invention can limit degradation of the thermal insulation performance of the vacuum thermal insulator more efficiently than the conventional techniques, achieving improved integrity.

### Brief Description of the Drawings

- FIGS. 1(a) and 1(b): are a top view and a sectional view of a composite thermal insulator according to Embodiment 1 of the present invention.
- FIG. 2: is a top view showing various regions on a surface of a vacuum thermal insulator according to Embodiment 1 of the present invention.
- FIG. 3: is a partial enlarged sectional view of the vacuum thermal insulator according to Embodiment 1 of the present invention.
- FIGS. 4(a) to 4(f): are diagrams describing a method for producing a composite thermal insulator according to Embodiment 1 of the present invention.
- FIGS. 5(a) and 5(b): are a top view and a sectional view of a composite thermal insulator according to Embodiment 2 of the present invention.
- FIG. 6: is a partial enlarged sectional view of the composite thermal insulator according to Embodiment 2 of the present invention.
- FIG. 7: is a diagram describing a method for producing the composite thermal insulator according to Embodiment 2 of the present invention.
- FIGS. 8(a) and 8(b): are a top view and a sectional view of a composite thermal insulator according to Embodiment 3 of the present invention.
- FIG. 9: is a top view of a vacuum thermal insulator according to Embodiment 4 of the present invention.
- FIGS. 10(a) to 10(b): are a top view and a schematic sectional view of a water heater according to Embodiment 4 of the present invention.
- FIG. 11: is a schematic sectional view of a compressor resulting from application of a composite thermal insulator according to Embodiment 5 of the present invention.

### Description of Embodiments

### Embodiment 1.

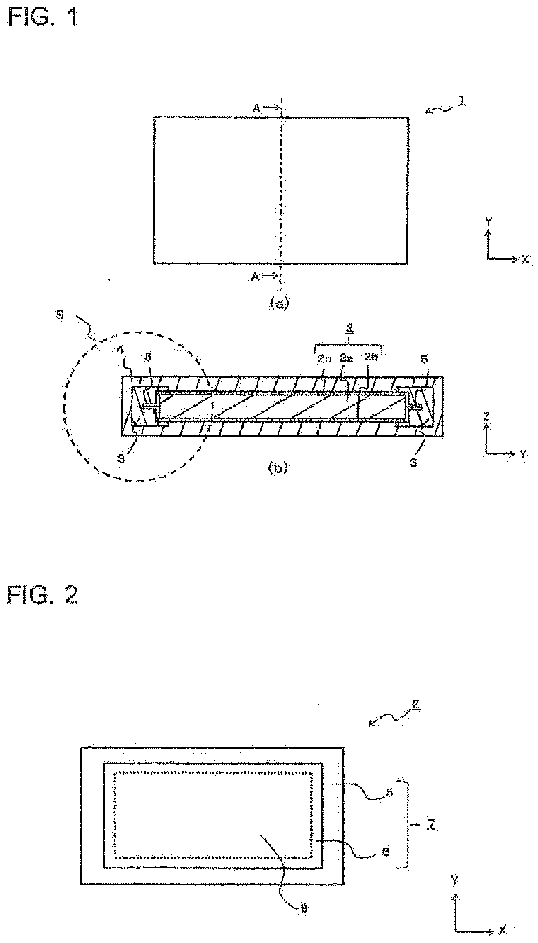

A composite thermal insulator 1 according to Embodiment 1 of the present invention will be described hereinafter with reference to FIGS. 1 to 4. In the drawings, components denoted by the same reference numerals are identical or equivalent components. This applies throughout the entire text of the specification.

FIGS. 1(a) and 1(b) are a top view and a sectional view of a composite thermal insulator 1 according to Embodiment 1 of the present invention, where FIG. (a) is a top view of the composite thermal insulator 1 and FIG. 1(b) is a sectional view taken along line A-A in FIG. 1(a). The composite thermal insulator 1 according to Embodiment 1 of the present invention includes a vacuum thermal insulator 2, a first heat insulating foam 3, and a second heat insulating foam 4.

Note that the top view shown in FIG. 1 is viewed in a -Z direction from a +Z direction. Also, XY coordinate and YZ coordinate directions in FIG. 1 are common to other figures (FIGS. 2 to 11).

The vacuum thermal insulator has core 2a and an enclosure 2b configured to wrap the core 2a. The core 2a is provided in the vacuum thermal insulator 2 and is covered with the enclosure 2b. Also, a weld portion 5 at which portions of the enclosure 2b are welded together along an outer periphery of the core 2a is formed on the vacuum thermal insulator 2 and an inside of the vacuum thermal insulator 2 is vacuum-sealed.

The core 2a of the vacuum thermal insulator 2 is formed, for example, of a fibrous material such as glass wool or PET (polyethylene terephthalate). According to Embodiment 1 of the present invention, the core 2a includes, for example, a laminate of plural (e.g., ten) quadrilateral fiber sheets each having about 2 millimeters thick. The fiber sheet is produced by forming fiber members, having, for example, about 3 µm to 5 µm in fiber diameter into a sheet shape. The core 2a is formed, for example, into a quadrilateral shape a little smaller than a quadrilateral shape of the composite thermal insulator 1 shown in the top view of FIG. 1(a).

The enclosure 2b of the vacuum thermal insulator 2 is a laminate film constructed by overlaying resin on front and back surfaces of metal foil. According to Embodiment 1 of the present invention, aluminum foil is used as the metal foil for enclosure 2b. Also, nylon, PET, or other material is laminated on the front surface of the aluminum foil. On the other hand, a thermoplastic resin, such as PE (polyethylene), lower in a softening point than the resin material used on the front surface, is laminated on the back surface of the aluminum foil.

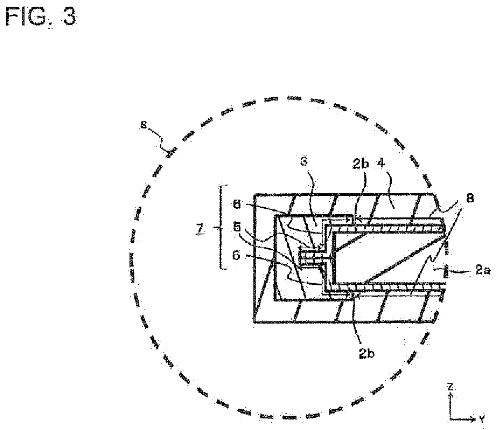

Now, regions on a surface of the vacuum thermal insulator 2 will be described with reference to FIGS. 2 and 3. FIG. 2 is a top view showing various regions on the surface of the vacuum thermal insulator 2 according to Embodiment 1 of the present invention. FIG. 3 is a partial enlarged sectional view of the composite thermal insulator 1 according to Embodiment 1 of the present invention. Also, FIG. 3 is an enlarged view of an area S surrounded by dotted lines in FIG. 1(b).

The surface regions of the vacuum thermal insulator 2 include edges 7 and a mid-part 8, which is the rest of the surface other than the edges 7. Also, the edges 7 include a weld portion 5 and peripheries 6. Note that as shown in FIG. 3, for both the edges 7 and the mid-part 8, the surface regions of the vacuum thermal insulator 2 comprise a +Z-side surface and -Z-side surface of the enclosure 2b provided symmetrically in a Z-axis direction with respect to the core 2a. That is, FIG. 2 shows the surface regions of the vacuum thermal insulator 2 when viewed in the -Z direction from the +Z direction, and the surface regions of the vacuum thermal insulator 2 when viewed in the +Z direction from the -Z direction look similar to FIG. 2.

In FIG. 2, the region surrounded by two solid-line quadrangles is the weld portion 5. In the weld portion 5, when wrapping the core 2a, the two portions of the enclosure 2b wrap the core 2a in such a way that the respective back surfaces will face each other, and then get welded together along the outer periphery of the core 2a. From a cross section of the vacuum thermal insulator 2 in FIG. 1(b) and from FIGS. 2 and 3, it can be seen that the weld portion 5 extends along the outer periphery of the core 2a.

In the weld portion 5, generally the portions of the enclosure 2b are welded together by heat and the inside of the vacuum thermal insulator 2 can be sealed as the weld portion 5 is formed. Also, normally the inside of the vacuum thermal insulator 2 sealed by the enclosure 2b is depressurized, increasing thermal insulation performance.

Note that the portions of the enclosure 2b do not need to be welded together in a full range of the weld portion 5, but may be welded partially. However, it is necessary that the weld portion 5 is formed along the outer periphery of the core 2a such that the inside of the vacuum thermal insulator 2 can be sealed. Also, since the inside of the vacuum thermal insulator 2 is depressurized, normally the inner one of the two solid-line quadrangles is equal in shape to the core 2a.

The region surrounded by the inner one of the two solid-line quadrangles and the broken-line quadrangle in FIG. 2 corresponds to the peripheries 6 of the vacuum thermal insulator 2. Of the surface regions of the vacuum thermal insulator 2, the peripheries 6 are regions covering the outer periphery of the core 2a. Referring to FIGS. 2 and 3, in an XY plane, the peripheries 6 are regions located adjacent to the weld portion 5, sized slightly smaller than the weld portion 5, shaped to follow the outer periphery of the core 2a, and configured to be about a few millimeters in width. Also, in the Z-axis direction, the widthwise dimension of the peripheries 6 corresponds to the dimension of the core 2a in the Z-axis direction (the thickness of core 2a). Also, the surface (quadrilateral region indicated by broken lines) of the vacuum thermal insulator 2 inside the peripheries 6 in the XY plane is the mid-part 8.

Here, the enclosure 2b includes metal foil, which can effectively prevent gas permeation. On the other hand, as described above, the weld 5 is a layer in which portions of resin in the enclosure 2b are heat-welded together. Referring to FIG. 1(b), in the weld 5 in which the portions of resin are heat-welded together, the metal foil effectively prevents gas permeation in the Z-axis direction, but in a Y-axis direction or X-axis direction, gas tends to permeate into the vacuum thermal insulator 2 from outside through the welded portions of resin. Therefore, moisture or gas enter the inside through the weld 5, increasing internal pressure of the vacuum thermal insulator 2, thereby increasing thermal conductivity, and resulting in decreased performance of the vacuum thermal insulator 2.

Also, as shown in FIG. 1(b), on the periphery 6 of the edge 7, since the enclosure 2b is bent at approximately 90°, pores on the order of micrometers may be produced in the enclosure 2b. Therefore, moisture and gas enter the inside of the vacuum thermal insulator 2 from outside through the micro-sized pores, increasing thermal conductivity and thereby degrading performance of the vacuum thermal insulator 2.

Thus, the edge 7 having the weld portion 5 and the periphery 6 is a portion through which gas tends to enter the inside from outside and the performance of the vacuum thermal insulator 2 is degraded. Note that in the weld portion 5, the back surfaces of the enclosure 2b are heat-welded to each other using a laminate of a thermoplastic resin lower in a softening point than the resin material used on the front surface of the enclosure 2b.

Thus, gas permeability increases with increases in temperature of the weld portion 5. Besides, when surroundings of the vacuum thermal insulator 2 are heated and pressurized, volume of gas entering the inside through the edges 7 of the vacuum thermal insulator 2 also tends to increase.

The first heat insulating foam 3 foamed in advance covers the edges 7 of the vacuum thermal insulator 2 including the weld portion 5 and is placed along the outer periphery of the core 2a. The first heat insulating foam 3 is formed of a foaming material and is made, for example, of foamed polystyrene beads. Note that foaming temperature necessary to foam the foamed polystyrene beads is approximately 110 °C and that heatproof temperature after the foaming is approximately 90 °C.

The heatproof temperature is the temperature at which no deformation or discoloration occurs under no force conditions. The heatproof temperature is determined based on presence or absence of deformation, for example, after a sample is left to stand in a constant temperature bath set at a high temperature for a predetermined period of time, left to stand in a reference temperature environment for a predetermined period of time, and then subjected to dimensional measurements.

With the first heat insulating foam 3 being placed on the vacuum thermal insulator 2, the second heat insulating foam 4 is foamed to cover the first heat insulating foam 3 and the vacuum thermal insulator 2. The second heat insulating foam 4 is a thermal insulator formed of an expandable material, and is made, for example, of foamed polypropylene beads. Foaming temperature necessary to foam the foamed polypropylene beads is approximately 140 °C and the heatproof temperature after the foaming is approximately 110 °C.

In the composite thermal insulator 1, the first heat insulating foam 3 is formed to cover the edges 7 of the vacuum thermal insulator 2, the second heat insulating foam 4 is formed to cover the mid-part 8 of the vacuum thermal insulator 2 and a surface of the first heat insulating foam 3, and the vacuum thermal insulator 2 and the first heat insulating foam 3 are coupled together by the second heat insulating foam 4.

Also, the first heat insulating foam 3 is structured not only to pinch the weld portion 5 of the vacuum thermal insulator 2, but also to pinch a few millimeters of the vacuum thermal insulator 2 (in the Y-axis direction or X-axis direction), covering the edges 7 including the peripheries 6.

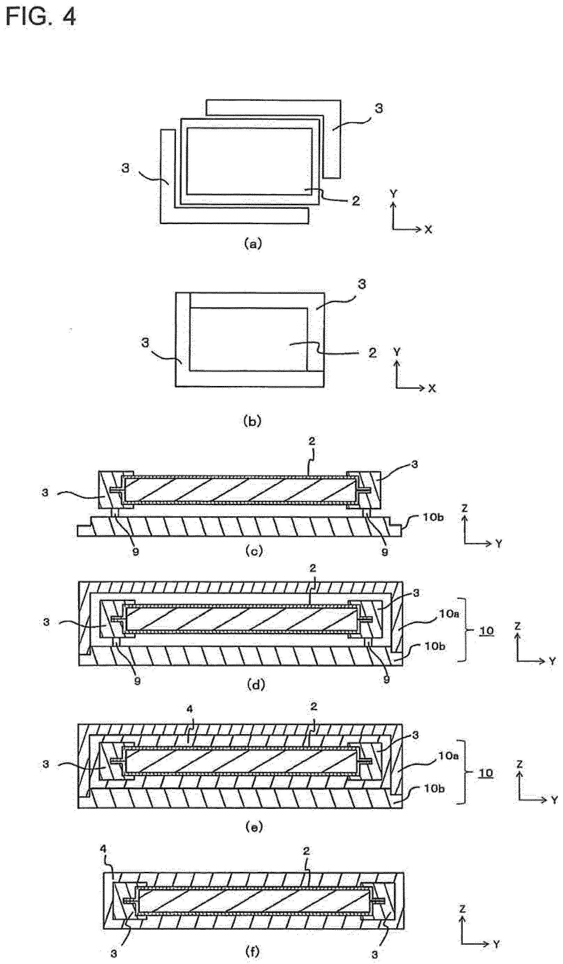

Next, an example of a method for producing the composite thermal insulator 1 according to Embodiment 1 of the present invention will be described with reference to FIG. 4. FIGS. 4(a) to 4(f) are diagrams describing the method for producing the composite thermal insulator 1 according to Embodiment 1 of the present invention. FIGS. 4(a) and 4(b) are diagrams showing steps of enclosing the vacuum thermal insulator 2 with the first heat insulating foam 3 and holding the vacuum thermal insulator 2 and FIG. 4(c) is a diagram showing a step of placing the vacuum thermal insulator 2 held by the first heat insulating foam 3 on a male mold 10b.

FIG. 4(d) is a diagram showing a step of combining the male mold 10b with a female mold 10a and thereby assembling a foaming mold 10 containing a cavity having a rectangular parallelepiped shape, FIG. 4(e) is a diagram showing a step of forming the second heat insulating foam 4 by foaming in the foaming mold 10, and FIG. 4(f) is a diagram showing the composite thermal insulator 1 produced by removing the foaming mold 10. Note that sectional views in FIG. 4(c) to FIG. 4(f) are taken along line A-A in FIG. 1(a).

As shown in FIG. 4 (a), the first heat insulating foam 3 foamed in advance is divided into two L-shaped portions for ease of attachment to the edges 7 of the vacuum thermal insulator 2. In relation to the vacuum thermal insulator 2, FIG. 4(b) shows a first step of covering edges of the vacuum thermal insulator 2 including the weld portion 5 with the first heat insulating foam 3 foamed in advance and placing the first heat insulating foam 3 along the outer periphery of the core 2a.

Here, recesses configured to house the edges 7 are formed in the first heat insulating foam 3, allowing the first heat insulating foam 3 to easily cover the edges 7 of the vacuum thermal insulator 2 including the weld portion 5. Note that the recesses are depressions corresponding in shape to the edges 7 of vacuum thermal insulator 2 shown in FIG. 3 and are shaped to be able to house the edges 7 as they are.

In FIG. 4(c), the vacuum thermal insulator 2 held by the first heat insulating foam 3 is placed on the male mold 10b via a holding member 9. Preferably, the holding member 9 is made of foamed polypropylene, which is the same material as the second heat insulating foam 4. In FIG. 4(d), in a state in which the vacuum thermal insulator 2 held by the first heat insulating foam 3 is placed on the male mold 10b via the holding member 9, the female mold 10a is fitted over the male mold 10b, thereby assembling the foaming mold 10.

In FIG. 4(e), the second heat insulating foam 4 covering the first heat insulating foam 3 and the vacuum thermal insulator 2 has been foamed. With the first heat insulating foam 3 placed in the foaming mold 10, preforming beads of the second heat insulating foam 4 are loaded, and preforming beads are foamed by being heated and pressurized, for example, with steam. The second heat insulating foam configured to cover the first heat insulating foam placed in the first step and at least part of the vacuum thermal insulator is foamed in a second step. Also, FIG. 4(f) is a diagram showing the composite thermal insulator 1 produced by removing the foaming mold 10.

As described above, the foaming temperature of the foamed polypropylene configured to form the second heat insulating foam 4 is approximately 140 °C and the heatproof temperature of the post-foaming foamed polystyrene beads configured to form the first heat insulating foam 3 is approximately 90 °C. That is, the foaming temperature of the second heat insulating foam 4 is higher than the heatproof temperature of the first heat insulating foam 3. Since the first heat insulating foam 3 configured to hold the vacuum thermal insulator 2 is formed of foamed polystyrene, if exposed to an environment of approximately 140 °C in a process of foaming the second heat insulating foam 4, the first heat insulating foam 3 shrinks greatly by exceeding the heatproof temperature (approximately 90 °C).

That is, because the second heat insulating foam 4 undergoes foaming at temperatures (approximately 140 °C) above the heatproof temperature (approximately 90 °C) of the first heat insulating foam 3, the first heat insulating foam 3 shrinks and deforms in such a way as to adhere closely to the vacuum thermal insulator 2. When the foaming mold 10 is removed after the second heat insulating foam 4 is foamed, the composite thermal insulator 1 shown in FIG. 4(c) is obtained.

Now, even if the second heat insulating foam 4 undergoes foaming at a temperature as high as approximately 140 °C, since the edges 7 of the vacuum thermal insulator 2 is covered with the first heat insulating foam 3, rises in temperature of the edges 7 of the vacuum thermal insulator 2 can be prevented, and the gas entering the inside through the edges 7 can be inhibited. In addition, the first heat insulating foam 3 shrinks and deforms in such a way as to adhere closely to the vacuum thermal insulator 2, improving adhesion between the first heat insulating foam 3 and the vacuum thermal insulator 2.

That is, when the foaming temperature of the second heat insulating foam 4 is higher than the heatproof temperature of the first heat insulating foam 3, a gap formed between the first heat insulating foam and the vacuum thermal insulator 2 can be filled up as the first heat insulating foam 3 shrinks. Furthermore, as the first heat insulating foam 3 covers the edges 7 of the vacuum thermal insulator 2, the first heat insulating foam 3 prevents gas permeation during formation by foaming of the second heat insulating foam 4, making it possible to inhibit high-temperature high-pressure gas from entering the inside through the edges 7 of the vacuum thermal insulator 2.

In Embodiment 1 of the present invention, a case in which the first heat insulating foam 3 and the second heat insulating foam 4 are formed of different materials have been cited by showing foamed polystyrene as an example of material for first heat insulating foam 3, and showing foamed polypropylene as an example of material for the second heat insulating foam 4, but this is not limitative.

For example, foamed polystyrene or foamed polypropylene may be used, for example, as a material for both the first heat insulating foam 3 and the second heat insulating foam 4. A same material may be used as long as the material is an expandable thermal insulator. When the first heat insulating foam 3 and the second heat insulating foam 4 are formed of a same material, the use of the same material provides a cost reduction effect.

Also, in the example cited in Embodiment 1 of the present invention, when the foaming temperature of the second heat insulating foam 4 is higher than the heatproof temperature of the first heat insulating foam 3, the first heat insulating foam 3 shrinks. However, it is not strictly necessary that the second heat insulating foam 4 is a material that undergoes foaming at a temperature above the heatproof temperature of the first heat insulating foam 3, and the second heat insulating foam 4 may be a material that undergoes foaming at a temperature equal to or lower than the heatproof temperature of the first heat insulating foam 3. Even if the first heat insulating foam 3 does not shrink, the first heat insulating foam 3 covers the edges 7 of the vacuum thermal insulator 2, offering the effect of inhibiting gas from entering the inside through the edges 7 of the vacuum thermal insulator 2.

Also, the enclosure 2b of the vacuum thermal insulator 2 is made of a material not weldable with the first heat insulating foam 3 or second heat insulating foam 4. The vacuum thermal insulator 2 is held in a simplified manner by the first heat insulating foam 3 foamed in advance, and on the vacuum thermal insulator 2 fitted in the first heat insulating foam 3, the second heat insulating foam 4 is foamed, covering the first heat insulating foam 3 and the vacuum thermal insulator 2. Consequently, all the above members are fixed to one another.

Also, the first heat insulating foam 3 is heated and pressurized during formation of the second heat insulating foam 4 and thereby compressed and deformed. Thus, a stratified boundary is formed between the second heat insulating foam 4 and the first heat insulating foam 3 after the foaming. By checking the boundary, the second heat insulating foam 4 and the first heat insulating foam 3 can be distinguished from each other.

The boundary between the second heat insulating foam 4 and the first heat insulating foam 3 can be checked by the following method. For example, when the second heat insulating foam 4 is foamed after the vacuum thermal insulator 2 is held in a simplified manner by the first heat insulating foam 3 foamed in advance, the second heat insulating foam 4 and the first heat insulating foam 3 are welded together slightly after the foaming, forming the boundary.

The boundary separates more easily than other surfaces of heat insulating foams, and so a region in which the first heat insulating foam 3 and the second heat insulating foam 4 individual with each other easily can be identified as the boundary. This also applies to the case where the second heat insulating foam 4 and the first heat insulating foam 3 are formed of a same material. If the first heat insulating foam 3 shrinks during formation of the second heat insulating foam 4, density of the first heat insulating foam 3 becomes larger than that of the second heat insulating foam 4 having a foaming ratio equal to that of the first heat insulating foam 3, allowing the boundary to be identified.

That is, after formation of the composite thermal insulator 1, a clear boundary exists between the second heat insulating foam 4 and the first heat insulating foam 3 and the first heat insulating foam 3 and the second heat insulating foam 4 exist as separate members different in form and style.

As described above, in the method for producing the composite thermal insulator 1 according to Embodiment 1 of the present invention, the composite thermal insulator 1 includes a vacuum thermal insulator 2, the vacuum thermal insulator comprising the core 2a and the enclosure 2b configured to wrap the core 2a, the weld portion 5 at which portions of the enclosure 2b are welded together along the outer periphery of the core 2a is formed on the vacuum thermal insulator, and the vacuum thermal insulator 2 has vacuum-sealed inside; the method comprises the first step of covering the edges 7 of the vacuum thermal insulator 2 including the weld portion 5 with the first heat insulating foam 3 foamed in advance and placing the first heat insulating foam 3 along the outer periphery of the core 2a; and the second step of forming the second heat insulating foam 4 configured to cover the first heat insulating foam 3 placed in the first step and at least part of the vacuum thermal insulator 2 by foaming.

The production method described above provides the composite thermal insulator 1 configured to achieve thermal insulation using the plate-shaped vacuum thermal insulator 2 having vacuum-sealed inside, the composite thermal insulator 1 comprising the first heat insulating foam 3 made of a first foamable material and placed on the outer periphery of the vacuum thermal insulator 2; and the second heat insulating foam 4 made of a second foamable material and configured to couple together the first heat insulating foam 3 and the vacuum thermal insulator 2.

With this configuration, when the second heat insulating foam 4 is formed by foaming, even if the surroundings of the vacuum thermal insulator 2 are heated and pressurized, since the first heat insulating foam 3 covers the edges 7 of the vacuum thermal insulator 2, it is possible to inhibit gas from entering the inside of the vacuum thermal insulator 2 through the edges 7 of the vacuum thermal insulator 2. This makes it possible to limit degradation of the thermal insulation performance of the vacuum thermal insulator 2 more efficiently than the conventional technique, and thereby provides the composite thermal insulator 1 whose thermal insulation performance has been improved compared to conventional ones.

Also, even if a gap is formed between the vacuum thermal insulator 2 and the first heat insulating foam 3 produced in advance, the second heat insulating foam 4 configured to cover the first heat insulating foam 3 and at least part of the vacuum thermal insulator 2 is normally formed seamlessly by foaming. Thus, the second heat insulating foam 4 can improve fixing between the first heat insulating foam 3 and the vacuum thermal insulator 2 and improve unity of the composite thermal insulator 1.

Also, the method for producing the composite thermal insulator 1 according to Embodiment 1 of the present invention may be configured such that the second step may foam preforming beads of the second heat insulating foam 4 at a foaming temperature higher than the heatproof temperature of the first heat insulating foam 3, thereby forming the second heat insulating foam 4 by foaming.

With this configuration, when the second heat insulating foam 4 is formed by foaming, the inside of the foaming mold 10 is heated to the foaming temperature higher than the heatproof temperature of the first heat insulating foam 3 to cause foaming. Then, since the heatproof temperature is exceeded, the first heat insulating foam 3 shrinks and deforms along irregularities on the surface of the vacuum thermal insulator 2, improving adhesion between the first heat insulating foam 3 and the vacuum thermal insulator 2.

The improvement of adhesion offers the effect of inhibiting gas from entering the inside of the vacuum thermal insulator 2 through the gap between the first heat insulating foam 3 and the vacuum thermal insulator 2 and then through the edges 7 of the vacuum thermal insulator 2. Also, the improvement of adhesion makes it possible to reduce an air layer between the edges 7 of the vacuum thermal insulator 2 and the first heat insulating foam 3. As a result, heat transfer by air convection is reduced and heat is conducted through the first heat insulating foam 3 with higher insulation efficiency, achieving an effect in terms of thermal insulation performance as well.

Note that whereas in the present embodiment, the holding member 9 is placed on the male mold 10b by abutting the first heat insulating foam 3, the holding member 9 may be placed on the male mold 10b by abutting the vacuum thermal insulator 2 rather than the first heat insulating foam 3.

Also, in the method for producing the composite thermal insulator 1 according to Embodiment 1 of the present invention, the second heat insulating foam 4 may be formed from a material different from the first heat insulating foam 3.

With this configuration, the materials of the first heat insulating foam 3 and the second heat insulating foam 4 can be selected freely, allowing a degree of shrinkage of the first heat insulating foam 3 to be adjusted by taking into consideration the heatproof temperature of the material of the first heat insulating foam 3 and the foaming temperature of the material of the second heat insulating foam 4.

Also, in the method for producing the composite thermal insulator 1 according to Embodiment 1 of the present invention, the first heat insulating foam 3 may be foamed polystyrene and the second heat insulating foam 4 may be foamed polypropylene.

With this configuration, there is a temperature difference of approximately 50 K between the heatproof temperature of the foamed polystyrene and foaming temperature of the foamed polypropylene, allowing the first heat insulating foam 3 to shrink sufficiently.

Also, in the method for producing the composite thermal insulator 1 according to Embodiment 1 of the present invention, the second heat insulating foam 4 may be formed from a same material as the first heat insulating foam 3.

With this configuration, the use of the same material enables cost reductions.

### Embodiment 2.

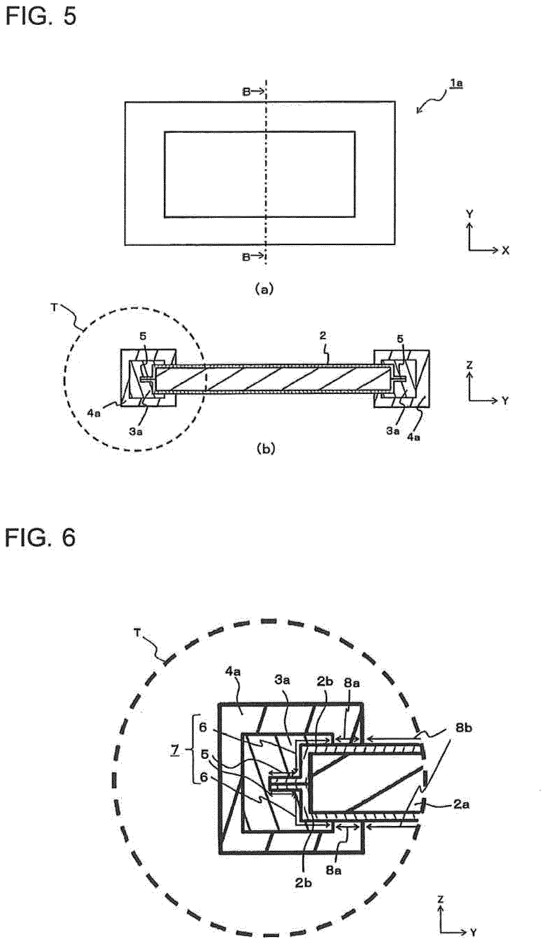

A composite thermal insulator 1a according to Embodiment 2 of the present invention will be described with reference to FIGS. 5 to 7. Note that in relation to the composite thermal insulator 1 according to Embodiment 1, description has been given of a configuration in which the entire surface of the vacuum thermal insulator 2 is covered with the first heat insulating foam 3 and the second heat insulating foam 4. In Embodiment 2 of the present invention, description will be given of a configuration in which the surface of the vacuum thermal insulator 2 is partly covered with a first heat insulating foam 3a and a second heat insulating foam 4a as a variation of the composite thermal insulator 1. Description will be given below, focusing on differences from Embodiment 1, and description of same or corresponding parts will be omitted as appropriate.

FIGS. 5(a) and 5(b) are a top view and a sectional view of the composite thermal insulator 1a according to Embodiment 2 of the present invention, where FIG. 5(a) is a top view of the composite thermal insulator 1a and FIG. 5(b) is a sectional view taken along line B-B in FIG. 5(a). FIG. 6 is a partial enlarged sectional view of the composite thermal insulator 1a according to Embodiment 2 of the present invention. Also, FIG. 6 is an enlarged view of an area T surrounded by dotted lines in FIG. 1(b).

As shown in FIGS. 5 and 6, according to Embodiment 2, of the surface of the vacuum thermal insulator 2 made up of edges 7 and a mid-part 8, which is a surface other than the edges 7, the edges 7 are covered with the first heat insulating foam 3a and part 8a of the mid-part adjacent to the edges 7 is covered with the second heat insulating foam 4a. The second heat insulating foam 4a is formed, following a shape of the first heat insulating foam 3a and thereby covering the first heat insulating foam 3a. Thus, on the surface of the vacuum thermal insulator 2, rest 8b of the mid-part other than the part 8a of the mid-part adjacent to the edges 7 is exposed outside without being covered with the second heat insulating foam 4a.

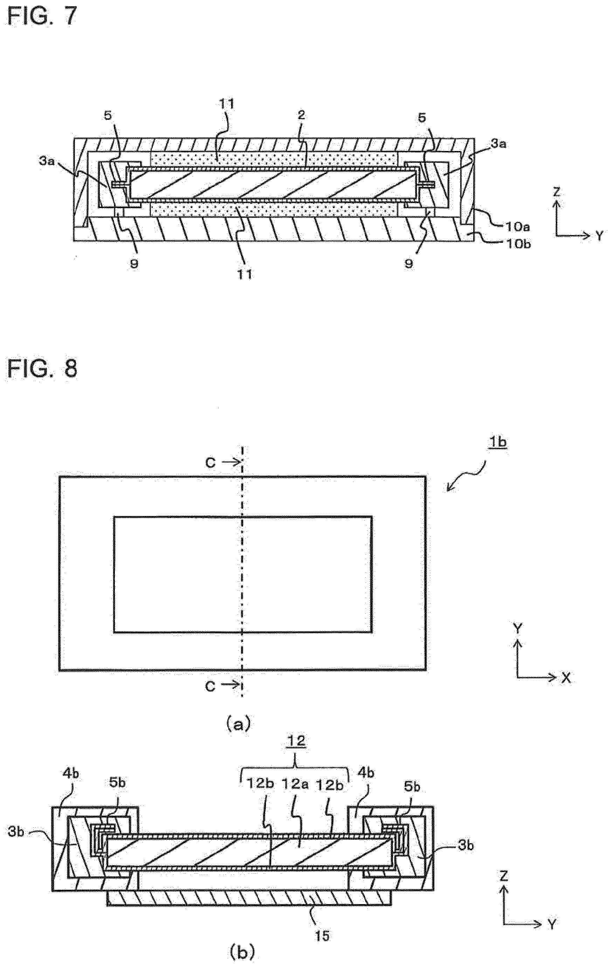

Next, FIG. 7 is a diagram describing a method for producing the composite thermal insulator 1a according to Embodiment 2 of the present invention. In FIG. 7, description of parts corresponding to those of the method for producing the composite thermal insulator 1 according to Embodiment 1 will be omitted, and differences will mainly be described.

As shown in FIG. 7, the vacuum thermal insulator 2 held by the first heat insulating foam 3a is provided in the foaming mold 10 via the holding member 9. Cushioning material 11 shown in FIG. 7 is provided in gaps between the foaming mold 10 and the vacuum thermal insulator 2 both on the +Z side and -Z side. Therefore, the cushioning 11 can be placed easily in the foaming mold 10 if the vacuum thermal insulator 2 held by the first heat insulating foam 3a is placed after placement of the cushioning 11 on the -Z side and then the cushioning 11 on the +Z side is placed.

After the vacuum thermal insulator 2 and cushioning 11 have been placed, preforming beads of the second heat insulating foam 4a are loaded into a space formed among the foaming mold 10, the first heat insulating foam 3a, and the cushioning 11. Foaming occurs when the preforming beads are heated by high temperature steam. Then, the second heat insulating foam 4a is foamed in a shape of the space among the foaming mold 10, the first heat insulating foam 3a, and the cushioning 11.

Here, the cushioning 11 may be a same material as, or a different material from, the second heat insulating foam 4a. When a different material is used, materials available for use include phenolic foam and polyimide foam that have higher heat resistance than foamed polypropylene, for example. Also, heat-resistant silicon blocks may be used as the cushioning 11. Also, the cushioning 11, which does not normally weld portion with the second heat insulating foam 4a and the vacuum thermal insulator 2, can be separated easily even after formation of the composite thermal insulator 1a.

Note that in the method for producing the composite thermal insulator 1a according to Embodiment 2 of the present invention, by changing shapes of the female mold 10a and the male mold 10b of the foaming mold 10, a wall surface of the mold may be formed in a portion corresponding to the cushioning 11 and caused to play a role of the cushioning 11. This eliminates the need to prepare the cushioning 11 and leads to cost reductions.

However, it is difficult to keep a clearance between the vacuum thermal insulator 2 and the wall surface of the mold in the Z-axis direction constant and there is a possibility in some cases that the wall surface of the mold might come in contact with the surface of the vacuum thermal insulator 2, breaking the vacuum thermal insulator 2. Therefore, preferably the production method uses the cushioning 11.

Also, although the cushioning 11 is provided on both sides of the vacuum thermal insulator 2 in the Z-axis direction as shown in FIG. 7, it is not strictly necessary to provide the cushioning 11 on both sides, and the cushioning 11 may be provided on either of the two sides.

Thus, with the method for producing the composite thermal insulator 1a according to Embodiment 2 of the present invention, in the surface regions of the vacuum thermal insulator 2 that comprise the edges 7 and the mid-part 8, to form the second heat insulating foam 4a in the part 8a of the mid-part adjacent to the edges 7, the second step places the cushioning 11 in the rest 8b of the mid-part other than the part 8a of the mid-part and foams the preforming beads of the second heat insulating foam 4a.

With this configuration, of the surface of the vacuum thermal insulator 2, the part 8a of the mid-part adjacent to the edges 7 is covered with the second heat insulating foam 4a and the rest 8b of the mid-part has its surface exposed without being covered with the second heat insulating foam 4a. Therefore, pin holes or cracks, if formed in the enclosure 2b, can be checked visually in the composite thermal insulator 1a through the exposed surface (the rest 8b of the mid-part) of the vacuum thermal insulator 2. The rest 8b of the mid-part may be provided only on one side or both sides of the vacuum thermal insulator 2.

Also, of the surface of the vacuum thermal insulator 2, since the part 8a of the mid-part adjacent to the edges 7 is covered with the second heat insulating foam 4a and the rest 8b of the mid-part is not covered with the second heat insulating foam 4a, material costs of the second heat insulating foam 4a can be slashed, making it possible to reduce costs of the composite thermal insulator 1a.

Incidentally, the thermal conductivity of the vacuum thermal insulator 2 is approximately one-tenth the thermal conductivity of the heat insulating foam, so even if some part of the vacuum thermal insulator 2 is not covered with the second heat insulating foam 4a, the thermal insulation performance of the composite thermal insulator 1a does not fall greatly compared to when the vacuum thermal insulator 2 is covered with the second heat insulating foam 4a.

Since the preforming beads of the second heat insulating foam 4a is foamed by being heated and pressurized, for example, with steam, temperature and pressure around the vacuum thermal insulator 2 increase. Consequently, pressure is applied to the vacuum thermal insulator 2 from outside applying a force in a compression direction and thereby posing a possibility in some cases that the vacuum thermal insulator 2 might be deformed.

Therefore, in that part of the mid-part 8 (the rest 8b of the mid-part) of the vacuum thermal insulator 2 that is not covered with the second heat insulating foam 4a, desirably the cushioning 11 is placed on both sides rather than only on one side of the vacuum thermal insulator 2. When the cushioning 11 is placed on both sides of the vacuum thermal insulator 2, in foaming the preforming beads of the second heat insulating foam 4a, the cushioning 11 acts as an obstacle and enables reductions in the force applied to the vacuum thermal insulator 2 in the compression direction. Thus, shrinkage of thickness of the vacuum thermal insulator 2 can be reduced.

Furthermore, on the surface of the vacuum thermal insulator 2, when the rest 8b of the mid-part not covered with the second heat insulating foam 4a exists on both sides of the vacuum thermal insulator 2, facing each other, there are exposed surface portions on both sides of the vacuum thermal insulator 2, making it possible to measure the thermal conductivity of the vacuum thermal insulator 2 directly with a thermal conductivity meter. Therefore, during and after production of the composite thermal insulator 1a, the thermal insulation performance of the vacuum thermal insulator 2 can be checked easily.

### Embodiment 3.

Methods for producing a composite thermal insulator 1b and a water heater according to Embodiment 3 of the present invention will be described with reference to FIG. 8. Note that in relation to the composite thermal insulator 1a according to Embodiment 2, description has been given of a case in which the weld portion 5 of the vacuum thermal insulator 2 is shaped to extend substantially in parallel to the XY plane. In Embodiment 3 of the present invention, description will be given of a case in which a weld portion 5b is bent to a same surface side (one side) of a vacuum thermal insulator 12. Description will be given below, focusing on differences from Embodiment 2, and description of same or corresponding parts will be omitted as appropriate.

FIGS. 8(a) and 8(b) are a top view and a sectional view of the composite thermal insulator 1b according to Embodiment 3 of the present invention, where FIG. 8(a) is a top view of the vacuum thermal insulator 12 and FIG. 8(b) is a sectional view taken along line C-C in FIG. 8(a). Here, description will be given of an example in which the composite thermal insulator 1b is applied to a flat-plate heat source 15.

The flat-plate heat source 15 is higher in temperature than an ambient environment. Also, instead of the flat-plate heat source 15, the heat source may be a tank configured to store hot water higher in temperature than the ambient environment or a compressor configured to discharge refrigerant higher in temperature than the ambient environment, for example, in a water heater described later in Embodiment 4 or Embodiment 5.

In a step shown in FIG. 8(b), the vacuum thermal insulator 12 has the weld portion 5b bent to the same surface side (in the +Z direction) of the vacuum thermal insulator 12. The composite thermal insulator 1b is placed with that face of the vacuum thermal insulator 12 that is located on the side (+Z direction) to which the weld portion 5b is bent being turned to a low-temperature side and that face of the vacuum thermal insulator 12 that is located on the side (-Z direction) opposite the bending side being turned to a high-temperature side (the side of the flat-plate heat source 15). In FIG. 8(b), the high-temperature flat-plate heat source 15 is provided on the -Z side of the composite thermal insulator 1b.

Now, an example of a method for producing the composite thermal insulator 1b according to Embodiment 3 of the present invention will be described. In bending the weld portion 5b of the vacuum thermal insulator 12, the weld portion 5b of the vacuum thermal insulator 12 extending substantially in parallel to the XY plane is bent in the +Z direction, and bent to the side of mid-part 8 of the vacuum thermal insulator 12 as well, and then brought into close contact with the surface of the vacuum thermal insulator 12. Then, with the weld portion 5b bent and placed in close contact with the surface of the vacuum thermal insulator 12, the edges 7 of the vacuum thermal insulator 12 are covered with a first heat insulating foam 3b and thereby held by the first heat insulating foam 3a. The vacuum thermal insulator 12 whose edges 7 are covered with the first heat insulating foam 3b is placed in the foaming mold 10 and a second heat insulating foam 4b is produced by foaming, thereby producing the composite thermal insulator 1b.

Thus, with the methods for producing the composite thermal insulator 1b and the water heater according to Embodiment 3 of the present invention, a first step bends the weld portion 5b along an outer periphery of the core 12a to the same surface side on the surface of the vacuum thermal insulator 12, covers the edges 7 of the vacuum thermal insulator 12 including the bent weld portion 5b by the first heat insulating foam 3b, and places the first heat insulating foam 3b along the outer periphery of the core 12a, while a step of placing the composite thermal insulator 1b places the composite thermal insulator 1b with that face of the vacuum thermal insulator 12 that is located on the side to which the weld portion 5b is bent being turned to a low-temperature side and that face of the vacuum thermal insulator 12 that is located on the side opposite the bending side being turned to a high-temperature side.

Gas permeability increases with increases in temperature of the weld portion 5b of an enclosure 12b, degrading thermal insulation performance of the vacuum thermal insulator 12. With this configuration, since that face of the vacuum thermal insulator 12 that is located on the side to which the weld portion 5b is bent is turned to the low-temperature side and the face located on the side opposite the bending side is turned to the high-temperature side, temperature rises in the weld portion 5b can be limited, thereby limiting degradation of the thermal insulation performance of the vacuum thermal insulator 12.

Also, since the weld portion 5b is bent to the same surface side, following a shape (an outer shape of the core 12a) of the vacuum thermal insulator 12, the vacuum thermal insulator 12 can be made compact compared to the vacuum thermal insulator 12 extending substantially in parallel to the XY plane without bending of the weld portion 5b. This increases a degree of freedom of installation of the composite thermal insulator 1b.

Also, since portions of the enclosure 12b are welded together via the weld portion 5b of the vacuum thermal insulator 12, even if the flat-plate heat source 15 is covered with the weld portion 5b, this is not effective in limiting heat transfer from the flat-plate heat source 15 to the ambient environment. Therefore, when the composite thermal insulator 1b in which the weld portion 5b is bent to the same surface side on the surface of the vacuum thermal insulator 12 is used, the core 12a of the vacuum thermal insulator 12 may be increased by an area corresponding an area of the weld portion 5b of the vacuum thermal insulator 12, where the weld portion 5b extends substantially in parallel to the XY plane.

This makes it possible to increase coverage of the flat-plate heat source 15 with the vacuum thermal insulator 12 while maintaining the degree of freedom of installation of the composite thermal insulator 1b and thereby limit heat transfer from the flat-plate heat source 15.

### Embodiment 4.

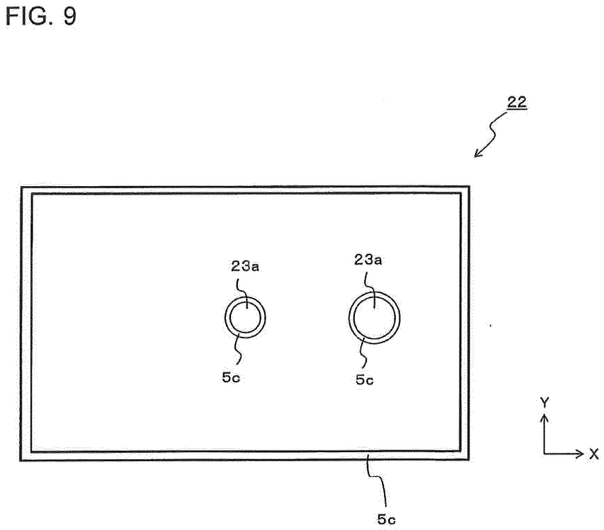

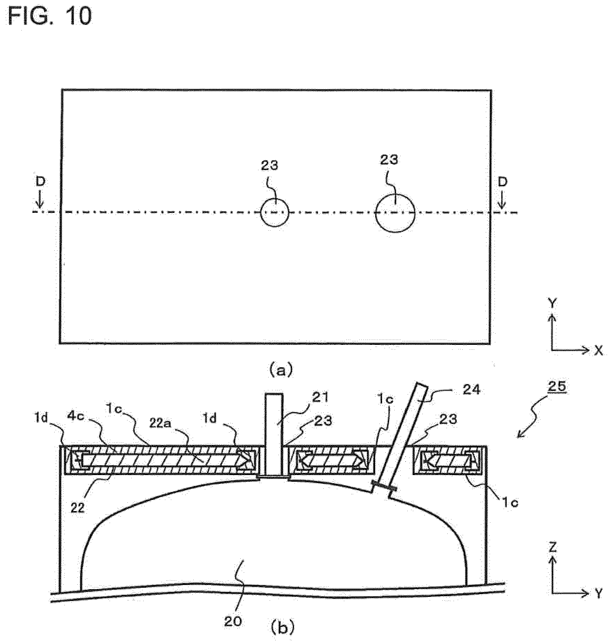

A water heater 25 according to Embodiment 4 of the present invention will be described with reference to FIGS. 9 and 10. Note that in Embodiment 4 of the present invention, description will be given of an example of a configuration resulting from application of a composite thermal insulator 1c to the water heater 25. Description will be given below, focusing on differences from Embodiment 1, and description of same or corresponding parts will be omitted as appropriate.

FIG. 9 is a top view of a vacuum thermal insulator 22 according to Embodiment 4 of the present invention. FIGS. 10(a) and 10(b) are a top view and a schematic sectional view of the water heater 25 according to Embodiment 4 of the present invention, where FIG. 10(a) is a top view of the water heater 25 schematically shown by omitting pipes connected to a tank 20 while FIG. 10(b) is a schematic diagram in which thickness of the enclosure and others are omitted.

In FIG. 10(a), through-holes 23 for passing pipes can be seen. FIG. 10(b) is a schematic sectional view of the water heater 25 taken along line D-D in FIG. 10(a). In Embodiment 4, description will be given of an example in which the composite thermal insulator 1c is applied when the tank 20 of the water heater 25 is used as a heat source.

Referring to FIG. 9, two through-holes 23a are provided in the vacuum thermal insulator 22 according to Embodiment 4 of the present invention. The through-holes 23a allow pipes and other components to be passed therethrough, improving installability of the vacuum thermal insulator 22. Also, a weld portion 5c is formed on edges of the vacuum thermal insulator 22 including circumferences of the through-holes 23a.

The tank 20 of the water heater 25 according to Embodiment 4 of the present invention is configured to store hot water therein, shaped approximately as a circular cylinder, and connected in upper part with an upper pipe 21 and a hot water supply pipe 24. Also, in FIG. 10 (b), lower part of the tank 20 is omitted, but the omitted lower part of the tank 20 is connected with a bottom pipe and a water supply pipe (neither is shown). Also, the upper pipe 21 and the bottom pipe are connected to an apparatus (not shown) capable of heating, for example, a refrigeration cycle apparatus.

Now, configuration and operation of the water heater 25 will be described briefly. In the water heater 25 according to Embodiment 4 of the present invention, the hot water accumulated in the tank 20 is sent to a heating device through the bottom pipe and heated there. The heated hot water is returned to the upper part of the tank 20 through the upper pipe 21. Also, when water (e.g., tap water) is supplied externally to the tank 20, the water is supplied to the lower part of the tank 20 through the water supply pipe.

Also, when water is supplied to the lower part of the tank 20, the hot water stored in the tank 20 is pushed up and supplied to the outside through the hot water supply pipe 24 connected to the upper part of tank 20. Note that because high-temperature water gathers in the upper part while low-temperature water gathers in the lower part in the tank 20, temperatures are distributed in a stratified manner.

Next, description will be given of the water heater 25 according to Embodiment 4 of the present invention in which the composite thermal insulator 1c is applied to the tank 20. The tank 20, which is a high-temperature heat source configured to store hot water higher in temperature than the ambient environment, becomes, for example, approximately 70 °C when hot water is stored. The temperature of the ambient environment varies with the seasons and is, for example, approximately 24 °C in summer, and approximately 7 °C in winter.

As shown in FIG. 10(b), the composite thermal insulator 1c is placed above the tank 20, covering a circumference of the tank 20, to thermally insulate the tank 20 from the ambient environment. The high-temperature hot water stored in the tank 20 is limited from heat transfer to the ambient environment by the composite thermal insulator 1c. That is, the composite thermal insulator 1c reduces heat leakage from the tank 20 on the high-temperature side to the ambient environment on the low-temperature side. Also, the tank 20 and the composite thermal insulator 1c are covered with an outer casing of the water heater 25 and are not visible directly from outside.

Now, an example of a method for forming through-holes 23a in the vacuum thermal insulator 22 will be described. Holes of desired diameters are formed in the core 22a, which is then covered with the enclosure. Then, portions of the enclosure are welded together along an outer periphery of the core 22a including hole portions and an inside of vacuum thermal insulator 22 is vacuum-sealed. Next, holes slightly smaller in diameter than the holes opened in the core 22a are formed in the enclosure.

Consequently, the weld portion 5c is formed on the edges of the vacuum thermal insulator 22, allowing the through-holes 23a to be formed, with the vacuum thermal insulator 22 being kept vacuum-enclosed.

Also, production of the composite thermal insulator 1c will be described briefly. An outer periphery of the vacuum thermal insulator 22 and the edges 7 of the through-holes 23a are covered with a first heat insulating foam 3c foamed in advance. Then, the vacuum thermal insulator 22 covered with the first heat insulating foam 3c is placed in a foaming mold and preforming beads of a second heat insulating foam 4c is foamed to form the second heat insulating foam 4c, thereby producing the composite thermal insulator 1c. Note that if a shape of the foaming mold is determined in advance to form the through-holes 23 configured to pass the upper pipe 21 and the hot water supply pipe 24 installed on the tank 20, the through-holes 23 are formed appropriately when the second heat insulating foam 4c is foamed.

Also, the composite thermal insulator 1c may be placed in a manner similar to the method for producing the water heater described in Embodiment 3 of the present invention. Using the composite thermal insulator 1c in which the weld portion 5c is bent to the same surface side on the surface of the vacuum thermal insulator along an outer periphery of the core 22a of the vacuum thermal insulator 22, that face of the vacuum thermal insulator 22 that is located on the side to which the weld portion 5c is bent may be turned to the low-temperature side, i.e., to the side of the ambient environment and the face located on the side opposite the bending side may be turned to the high-temperature side, i.e., to the side of the tank 20. By limiting heating of the weld portion 5c, thereby limiting permeation of gas into the vacuum thermal insulator 22, it is possible to limit degradation of the thermal insulation performance of the composite thermal insulator 1c.

Thus, the water heater 25 according to Embodiment 4 of the present invention is produced using the composite thermal insulator 1c that includes the vacuum thermal insulator 22, where the vacuum thermal insulator 22 has the core 22a and the enclosure configured to wrap the core 22a, the weld portion 5c at which portions of the enclosure are welded together along the outer periphery of the core 22a is formed on the vacuum thermal insulator 22, and the inside of the vacuum thermal insulator 22 is vacuum-sealed, wherein the composite thermal insulator 1c is produced in a production method that includes:
a step of placing the composite thermal insulator 1c around the tank configured to store high-temperature hot water, where the composite thermal insulator 1c is produced in a first step of covering edges of the vacuum thermal insulator 22 including the weld portion 5c with the first heat insulating foam 3c foamed in advance and placing the first heat insulating foam 3c along the outer periphery of the core 22a; and a second step of forming a second heat insulating foam 4c configured to cover the first heat insulating foam 3c placed in the first step and at least part of the vacuum thermal insulator 22.

With this configuration, by placing the composite thermal insulator 1c around the tank 20 of the water heater 25, the tank 20 storing hot water, heat transfer from the tank 20 to the ambient environment can be limited. This improves heat retention of the hot water stored in the tank 20.

Also, in the water heater 25 according to Embodiment 4 of the present invention, the through-holes 23 may be formed in the composite thermal insulator 1c.

With this configuration, since the pipes installed on the tank 20 of the water heater 25 passes through the through-holes 23 in the composite thermal insulator 1c, the composite thermal insulator 1c can be installed easily on the tank 20 even though the tank 20 contains obstacles such as pipes. This improves heat retention of the hot water stored in the tank 20.

### Embodiment 5.

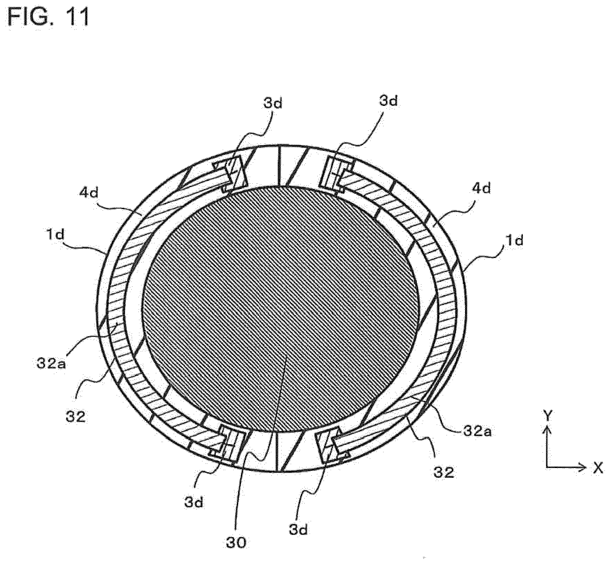

In Embodiment 5 of the present invention, description will be given of an example of a configuration resulting from application of composite thermal insulator 1d to a compressor 30 included in a refrigeration cycle of a water heater, with reference to FIG. 11. Description will be given below, focusing on differences from Embodiment 4, and description of same or corresponding parts will be omitted as appropriate.

FIG. 11 is a schematic sectional view of the compressor 30 resulting from application of the composite thermal insulator 1d according to Embodiment 5 of the present invention. The schematic sectional view is in parallel to the XY plane.
A cylindrical compressor 30 is illustrated as a heat source by example in Embodiment 5 of the present invention. Here, the compressor 30 is part of a refrigeration cycle apparatus used to heat water to be stored in a tank of the water heater. The compressor 30 can suck refrigerant, for example, at a temperature of approximately 10 °C, internally compress the refrigerant, thereby heat the refrigerant to approximately 80 °C, which is higher than the temperature of the ambient environment, and discharge the refrigerant.

The compressor 30 heats the refrigerant to approximately 80 °C through a compression stroke and then discharges the refrigerant, so the compressor 30 itself becomes higher in temperature than the ambient environment. Also, the compressor 30 applied to the water heater can improve operating efficiency by limiting heat transfer from a main body of the compressor 30.

Thus, if the composite thermal insulator 1d is placed around the compressor 30, heat transfer from the main body of the compressor 30 to the ambient environment can be limited. As shown in FIG. 11, the compressor 30 is cylindrical in shape and is covered peripherally with the composite thermal insulator 1d.

Here, the composite thermal insulator 1d is placed along side faces of the compressor 30. The composite thermal insulator 1d is created, for example, by forming a plate-shaped vacuum thermal insulator 32 into a cylindrical shape. The vacuum thermal insulator 32 is bent and formed using, for example, a 3-axis roll bender. The bent vacuum insulating material 32 has the edges 7 covered with a first heat insulating foam 3d and the vacuum thermal insulator 32 covered with the first heat insulating foam 3d is placed in the foaming mold. Then, preforming beads of a second heat insulating foam 4d is foamed, producing the composite thermal insulator 1d also applicable to the side faces of the cylinder-shaped compressor 30.

On the other hand, when the plate-shaped vacuum thermal insulator 32 is processed into a cylindrical shape, the surface of the vacuum thermal insulator 32 will be creased by bending. If one attempts to attach the creased vacuum thermal insulator 32 directly to a surface of the compressor 30, gaps will be produced between the vacuum thermal insulator 32 and the compressor 30 by the creases. If there is any gap, convection may occur in the gap, which might lead to reduced thermal insulation performance.

Thus, with the composite thermal insulator 1d according to Embodiment 5 of the present invention, the second heat insulating foam 4d is formed following the cylindrical shape of the compressor 30. Consequently, no gap is created between the composite thermal insulator 1d and the compressor 30, which improves adhesion.

Also, the refrigeration cycle apparatus of the water heater includes the compressor 30 configured to discharge refrigerant higher in temperature than the ambient environment, configured to be cylindrical in sectional shape in a direction parallel to the XY plane, and covered peripherally with the composite thermal insulator 1d; a condenser configured to condense the refrigerant discharged from the compressor 30, by rejecting heat from the refrigerant; an expansion mechanism configured to expand the refrigerant condensed by the condenser; and an evaporator configured to heat the refrigerant expanded by the expansion mechanism. Furthermore, the water heater includes a tank configured to store hot water produced by the condenser of the refrigeration cycle apparatus by transferring heat from the refrigerant.

Note that in the water heater according to Embodiment 5 of the present invention, two portions of the composite thermal insulator 1d are placed around the compressor 30 as shown in FIG. 11. The composite thermal insulator 1d may be placed around the compressor 30 by being divided into more than two parts. That is, the composite thermal insulator 1d may be placed around the compressor 30 by being divided into plural parts. Also, the composite thermal insulator 1d may be placed around the compressor 30 without being produced in the shape of a cylinder, followed by subsequent division.

Also, the composite thermal insulator 1d may be placed in a manner similar to the method for producing the water heater described in Embodiment 3 of the present invention. Using the composite thermal insulator 1d in which the weld portion is bent to the same surface side on the surface of the vacuum thermal insulator 32 along an outer periphery of a core 32a of the vacuum thermal insulator 32, that face of the vacuum thermal insulator 32 that is located on the side to which the weld portion is bent may be turned to the low-temperature side, i.e., to the side of the ambient environment and the face located on the side opposite the bending side may be turned to the high-temperature side, i.e., to the side of the compressor 30. If permeation of gas into the vacuum thermal insulator 32 is limited by limiting heating of the weld, degradation of the thermal insulation performance of the composite thermal insulator 1d can be limited.

Thus, the method for producing the water heater according to Embodiment 5 of the present invention uses a composite thermal insulator 1d that includes a vacuum thermal insulator 32, where the vacuum thermal insulator 32 has the core 32a and the enclosure configured to wrap the core 32a, the weld portion at which portions of the enclosure are welded together along the outer periphery of the core is formed on the vacuum thermal insulator 32, and the inside of the vacuum thermal insulator 32 is vacuum-sealed, the method comprising a step of placing the composite thermal insulator 1d around a compressor 30 configured to discharge refrigerant where the composite thermal insulator 1d is produced in a first step of covering edges of the vacuum thermal insulator 32 including the weld portion with the first heat insulating foam 3d foamed in advance and placing the first heat insulating foam 3d along the outer periphery of the core 32a and a second step of forming the second heat insulating foam 4d configured to cover the first heat insulating foam 3d placed in the first step and at least part of the vacuum thermal insulator 32.

With this configuration, since the compressor 30 is covered peripherally with the composite thermal insulator 1d, heat transfer from the compressor 30 to the ambient environment can be limited, thereby improving performance of the refrigeration cycle apparatus in heating water for the water heater.

Also, in the water heater according to Embodiment 5 of the present invention, the compressor 30 has a cylindrical shape and the second heat insulating foam 4d of the composite thermal insulator 1d may be formed into a shape that follows the cylindrical shape of the compressor 30.

With this configuration, since the second heat insulating foam 4d is formed, following the cylindrical shape of the compressor 30, adhesion between the composite thermal insulator 1d and the compressor 30 can be improved. Also, the second heat insulating foam 4d can be shaped easily by cutting or other step, making it easy to perform forming to improve adhesion between the composite thermal insulator 1d and the compressor 30. Thus, heat transfer from the compressor 30 to the ambient environment can be limited, thereby improving the performance of the refrigeration cycle apparatus.

Note that any of the embodiments of the present invention may be combined freely or altered or omitted as appropriate within the scope of the invention.

### List of Reference Signs

- 1, 1, 1a, 1b, 1c, 1d: composite thermal insulator
- 2, 12, 22, 32: vacuum thermal insulator
- 2a, 12a, 22a, 32a: core
- 2b, 12b: enclosure
- 3, 3a, 3b, 3c, 3d: first heat insulating foam
- 4, 4a, 4b, 4c, 4d: second heat insulating foam
- 5, 5b, 5c: weld
- 7: edge
- 8: mid-part
- 8a: part of the mid-part
- 8b: rest of the mid-part
- 11: cushioning
- 20: tank
- 25: water heater
- 30: compressor

## Claims

1. A method for producing a composite thermal insulator (1, 1a, 1b, 1c, 1d) including a vacuum thermal insulator (2, 12, 22, 32), the vacuum thermal insulator (2, 12, 22, 32) comprising a core (2a, 12a, 22a, 32a) and an enclosure (2b, 12b) configured to wrap the core (2a, 12a, 22a, 32a) and include a weld portion (5, 5b, 5c) which is configured to extend along an outer periphery of the core (2a, 12a, 22a, 32a) and at which portions of the enclosure (2b, 12b) are welded together, the vacuum thermal insulator (2, 12, 22, 32) having vacuum-sealed inside,
the method comprising:
- a first step of covering edges (7) of the vacuum thermal insulator (2, 12, 22, 32) including the weld portion (5, 5b, 5c) with a first heat insulating foam (3, 3a, 3b, 3c, 3d) foamed in advance, and placing the first heat insulating foam (3, 3a, 3b, 3c, 3d) along the outer periphery of the core (2a, 12a, 22a, 32a); and
- a second step of forming a second heat insulating foam (4, 4a, 4b, 4c, 4d) configured to cover the first heat insulating foam (3, 3a, 3b, 3c, 3d) placed in the first step and at least part of the vacuum thermal insulator (2, 12, 22, 32) by foaming.

2. The method of claim 1,
wherein the second step foams preforming beads of the second heat insulating foam (4, 4a, 4b, 4c, 4d) at a foaming temperature higher than a heatproof temperature of the first heat insulating foam (3, 3a, 3b, 3c, 3d), thereby forming the second heat insulating foam (4, 4a, 4b, 4c, 4d) by foaming, wherein the heatproof temperature is the temperature at which no deformation or discoloration occurs under no force conditions.

3. The method of claim 1 or 2,
wherein in surface regions of the vacuum thermal insulator (2, 12, 22, 32) that comprise the edges (7) and a mid-part (8), to form the second heat insulating foam (4, 4a, 4b, 4c, 4d) at a part of the mid-part (8) adjacent to the edges (7), the second step includes placing a cushioning (11) at rest of the mid-part (8) and foaming the preforming beads of the second heat insulating foam (4, 4a, 4b, 4c, 4d).

4. The method of any one of claims 1 to 3,
wherein the second heat insulating foam (4, 4a, 4b, 4c, 4d) is formed from a material different from the first heat insulating foam (3, 3a, 3b, 3c, 3d) by foaming.

5. The method of claim 4,
wherein the first heat insulating foam (3, 3a, 3b, 3c, 3d) is of foamed polystyrene; and
wherein the second heat insulating foam (4, 4a, 4b, 4c, 4d) 4 is of foamed polypropylene.

6. The method of any one of claims 1 to 3,
wherein the second heat insulating foam (4, 4a, 4b, 4c, 4d) is formed from a same material as the first heat insulating foam (3, 3a, 3b, 3c, 3d) by foaming.

7. A method for producing a water heater (25)
comprising a step of placing the composite thermal insulator (1, 1a, 1b, 1c, 1d) around a tank (20) configured to store hot water, the composite thermal insulator (1, 1a, 1b, 1c, 1d)being produced by means of the production method of any one of claims 1 to 6.

8. A method for producing a water heater (25)
comprising a step of placing the composite thermal insulator (1, 1a, 1b, 1c, 1d) around a compressor (30) configured to discharge refrigerant, the composite thermal insulator (1, 1a, 1b, 1c, 1d) being produced by the method of any one of claims 1 to 6.

9. The method of claim 7 or 8,
wherein the first step includes bending the weld portion (5, 5b, 5c) along the outer periphery of the core (2a, 12a, 22a, 32a) to one surface side of the vacuum thermal insulator (2, 12, 22, 32), covering the edges (7) of the vacuum thermal insulator (2, 12, 22, 32) including the bent weld portion (5, 5b, 5c) with the first heat insulating foam (3, 3a, 3b, 3c, 3d), and placing the first heat insulating foam (3, 3a, 3b, 3c, 3d) along the outer periphery of the core (2a, 12a, 22a, 32a), and
wherein the step of placing the composite thermal insulator (1, 1a, 1b, 1c, 1d) includes placing the composite thermal insulator (1, 1a, 1b, 1c, 1d) with one face of the vacuum thermal insulator (2, 12, 22, 32) that is on the side to which the weld portion (5, 5b, 5c) is bent being turned to a low-temperature side and another face of the vacuum thermal insulator (2, 12, 22, 32) being turned to a high-temperature side.

10. A composite thermal insulator (1, 1a, 1b, 1c, 1d) configured to achieve thermal insulation using a plate-shaped vacuum thermal insulator (2, 12, 22, 32) having vacuum-sealed inside,
the composite thermal insulator (1, 1a, 1b, 1c, 1d) comprising:
- a first heat insulating foam (3, 3a, 3b, 3c, 3d) made of a first foamable material (3, 3a, 3b, 3c, 3d) and placed on an outer periphery of the vacuum thermal insulator (2b, 12b); and
- a second heat insulating foam (4, 4a, 4b, 4c, 4d) made of a second foamable material (4, 4a, 4b, 4c, 4d) and configured to couple together the first heat insulating foam (3, 3a, 3b, 3c, 3d) and the vacuum thermal insulator (2, 12, 22, 32), wherein the second heat insulating foam (4, 4a, 4b, 4c, 4d) covers the first heat insulating foam (3, 3a, 3b, 3c, 3d) and at least part of the vacuum thermal insulator (2, 12, 22, 32).

11. The composite thermal insulator (1, 1a, 1b, 1c, 1d) of claim 10,
wherein the first heat insulating foam (3, 3a, 3b, 3c, 3d) and the second heat insulating foam (4, 4a, 4b, 4c, 4d) are members individual with one another.

12. The composite thermal insulator (1, 1a, 1b, 1c, 1d) of any one of claims 10 or 11, wherein a foaming temperature of the second foamable material (4, 4a, 4b, 4c, 4d) is higher than a heatproof temperature of the first foamable material (3, 3a, 3b, 3c, 3d).

## Patentansprüche

1. Verfahren zur Herstellung eines Verbundwärmeisolators (1, 1a, 1b, 1c, 1d), der einen Vakuumwärmeisolator (2, 12, 22, 32) aufweist, wobei der Vakuumwärmeisolator (2, 12, 22, 32) einen Kern (2a, 12a, 22a, 32a) und eine Umhüllung (2b, 12b) aufweist, die so konfiguriert ist, dass sie den Kern (2a, 12a, 22a, 32a) umhüllt und einen Schweißbereich (5, 5b, 5c) aufweist, der so konfiguriert ist, dass er sich entlang eines Außenumfangs des Kerns (2a, 12a, 22a, 32a) erstreckt und an dem Bereiche der Umhüllung (2b, 12b) miteinander verschweißt ist, wobei der Vakuumwärmeisolator (2, 12, 22, 32) eine vakuumversiegelte Innenseite aufweist,
wobei das Verfahren Folgendes aufweist:
- einen ersten Schritt zum Abdecken von Rändern (7) des Vakuum-Wärmeisolators (2, 12, 22, 32), einschließlich des Schweißbereichs (5, 5b, 5c), mit einem ersten wärmeisolierenden Schaumstoff (3, 3a, 3b, 3c, 3d), der im Voraus aufgeschäumt worden ist, und zum Anbringen des ersten wärmeisolierenden Schaumstoffs (3, 3a, 3b, 3c, 3d) entlang des Außenumfangs des Kerns (2a, 12a, 22a, 32a); und
- einen zweiten Schritt zum Bilden eines zweiten wärmeisolierenden Schaumstoffs (4, 4a, 4b, 4c, 4d), der so konfiguriert ist, dass er den ersten wärmeisolierenden Schaumstoff (3, 3a, 3b, 3c, 3d), der im ersten Schritt angebracht worden ist, und zumindest einen Teil des Vakuumwärmeisolators (2, 12, 22, 32) durch Aufschäumen bedeckt.

2. Verfahren nach Anspruch 1,
wobei der zweite Schritt Vorformungsperlen des zweiten wärmeisolierenden Schaumstoffs (4, 4a, 4b, 4c, 4d) bei einer Aufschäumtemperatur aufschäumt, die höher ist als eine hitzebeständige Temperatur des ersten wärmeisolierenden Schaumstoffs (3, 3a, 3b, 3c, 3d), so dass der zweite wärmeisolierende Schaumstoff (4, 4a, 4b, 4c, 4d) durch Aufschäumen gebildet wird, wobei die hitzebeständige Temperatur die Temperatur ist, bei der keine Verformung oder Verfärbung unter keinen Kraftbedingungen auftritt.

3. Verfahren nach Anspruch 1 oder 2,
wobei in Oberflächenbereichen des Vakuumwärmeisolators (2, 12, 22, 32), die die Ränder (7) und einen Mittelbereich (8) aufweisen, zum Ausbilden des zweiten wärmeisolierenden Schaumstoffs (4, 4a, 4b, 4c, 4d) an einem Teil des Mittelbereichs (8), der an die Ränder (7) angrenzt, der zweite Schritt das Anbringen einer Polsterung (11) auf dem Rest des Mittelbereichs (8) und das Aufschäumen der Vorformungsperlen des zweiten wärmeisolierenden Schaumstoffs (4, 4a, 4b, 4c, 4d) aufweist.

4. Verfahren nach einem der Ansprüche 1 bis 3,
wobei der zweite wärmeisolierende Schaumstoff (4, 4a, 4b, 4c, 4d) aus einem anderen Material als der erste wärmeisolierende Schaumstoff (3, 3a, 3b, 3c, 3d) durch Aufschäumen gebildet wird.

5. Verfahren nach Anspruch 4,
wobei der erste wärmeisolierende Schaumstoff (3, 3a, 3b, 3c, 3d) aus geschäumtem Polystyrol besteht; und
wobei der zweite wärmeisolierende Schaumstoff (4, 4a, 4b, 4c, 4d) 4 aus geschäumtem Polypropylen besteht.

6. Verfahren nach einem der Ansprüche 1 bis 3,
wobei der zweite wärmeisolierende Schaumstoff (4, 4a, 4b, 4c, 4d) aus dem gleichen Material wie der erste wärmeisolierende Schaumstoff (3, 3a, 3b, 3c, 3d) durch Aufschäumen gebildet wird.

7. Verfahren zur Herstellung eines Wassererhitzers (25), welches einen Schritt zum Anbringen des Verbundwärmeisolators (1, 1a, 1b, 1c, 1d) um einen Tank (20) aufweist, der zum Speichern von heißem Wasser konfiguriert ist, wobei der Verbundwärmeisolator (1, 1a, 1b, 1c, 1d) mittels des Herstellungsverfahrens nach einem der Ansprüche 1 bis 6 hergestellt wird.

8. Verfahren zur Herstellung eines Wassererhitzers (25), welches einen Schritt zum Anordnen des Verbundwärmeisolators (1, 1a, 1b, 1c, 1d) um einen Kompressor (30) aufweist, der zur Abgabe von Kältemittel konfiguriert ist, wobei der Verbundwärmeisolator (1, 1a, 1b, 1c, 1d) durch das Verfahren nach einem der Ansprüche 1 bis 6 hergestellt wird.

9. Verfahren nach Anspruch 7 oder 8,
wobei der erste Schritt ein Biegen des Schweißbereichs (5, 5b, 5c) entlang des Außenumfangs des Kerns (2a, 12a, 22a, 32a) zu einer Oberflächenseite des Vakuumwärmeisolators (2, 12, 22, 32), ein Abdecken der Ränder (7) des Vakuumwärmeisolators (2, 12, 22, 32), einschließlich des gebogenen Schweißbereichs (5, 5b, 5c), mit dem ersten wärmeisolierenden Schaumstoff (3, 3a, 3b, 3c, 3d), und das Anordnen des ersten wärmeisolierenden Schaumstoffs (3, 3a, 3b, 3c, 3d) entlang des Außenumfangs des Kerns (2a, 12a, 22a, 32a) aufweist, und wobei der Schritt zum Anbringen des Verbundwärmeisolators (1, 1a, 1b, 1c, 1d) ein Anbringen des Verbundwärmeisolators (1, 1a, 1b, 1c, 1d) mit einer Fläche des Vakuumwärmeisolators (2, 12, 22, 32), die sich auf der Seite befindet, zu der der Schweißbereich (5, 5b, 5c) gebogen ist, zu einer Niedertemperaturseite gedreht und einer anderen Fläche des Vakuumwärmeisolators (2, 12, 22, 32) zu einer Hochtemperaturseite gedreht, aufweist.

10. Verbundwärmeisolator (1, 1a, 1b, 1c, 1d), der so konfiguriert ist, dass er eine Wärmeisolierung unter Verwendung eines plattenförmigen Vakuumwärmeisolators (2, 12, 22, 32) mit vakuumversiegelter Innenseite erreicht,
wobei der Verbundwärmeisolator (1, 1a, 1b, 1c, 1d) Folgendes aufweist:
- einen ersten wärmeisolierenden Schaumstoff (3, 3a, 3b, 3c, 3d), der aus einem ersten aufschäumbaren Material (3, 3a, 3b, 3c, 3d) besteht und an einem Außenumfang des Vakuumwärmeisolators (2b, 12b) angeordnet ist; und
- einen zweiten wärmeisolierenden Schaumstoff (4, 4a, 4b, 4c, 4d), der aus einem zweiten schäumbaren Material (4, 4a, 4b, 4c, 4d) besteht und so konfiguriert ist, dass er den ersten wärmeisolierenden Schaumstoff (3, 3a, 3b, 3c, 3d) und den Vakuumwärmeisolator (2, 12, 22, 32) miteinander verbindet,
wobei der zweite wärmeisolierende Schaumstoff (4, 4a, 4b, 4c, 4d) den ersten wärmeisolierenden Schaumstoff (3, 3a, 3b, 3c, 3d) und zumindest einen Teil des Vakuum-Wärmeisolators (2, 12, 22, 32) bedeckt.

11. Verbundwärmeisolator (1, 1a, 1b, 1c, 1d) nach Anspruch 10,
wobei der erste wärmeisolierende Schaumstoff (3, 3a, 3b, 3c, 3d) und der zweite wärmeisolierende Schaumstoff (4, 4a, 4b, 4c, 4d) zueinander individuelle Elemente sind.

12. Verbundwärmeisolator (1, 1a, 1b, 1c, 1d) nach einem der Ansprüche 10 oder 11, wobei eine Aufschäumtemperatur des zweiten aufschäumbaren Materials (4, 4a, 4b, 4c, 4d) höher ist als eine Hitzebeständigkeitstemperatur des ersten aufschäumbaren Materials (3, 3a, 3b, 3c, 3d).

## Revendications

1. Procédé de fabrication d'un isolant thermique composite (1, 1a, 1b, 1c, 1d) incluant un isolant thermique sous vide (2, 12, 22, 32), l'isolant thermique sous vide (2, 12, 22, 32) comprenant un noyau (2a, 12a, 22a, 32a) et une enceinte (2b, 12b) configurée pour envelopper le noyau (2a, 12a, 22a, 32a) et inclure une partie soudée (5, 5b, 5c) qui est configurée pour s'étendre le long d'une périphérie extérieure du noyau (2a, 12a, 22a, 32a) et au niveau de laquelle des parties de l'enceinte (2b, 12b) sont soudées ensemble, l'isolant thermique sous vide (2, 12, 22, 32) ayant un intérieur scellé sous vide,
le procédé comprenant :
- une première étape consistant à recouvrir les bords (7) de l'isolant thermique sous vide (2, 12, 22, 32), y compris la partie soudée (5, 5b, 5c), avec une première mousse thermo-isolante (3, 3a, 3b, 3c, 3d) expansée à l'avance, et à placer la première mousse thermo-isolante (3, 3a, 3b, 3c, 3d) le long de la périphérie extérieure du noyau (2a, 12a, 22a, 32a) ; et
- une seconde étape consistant à former une seconde mousse thermo-isolante (4, 4a, 4b, 4c, 4d) configurée pour recouvrir la première mousse thermo-isolante (3, 3a, 3b, 3c, 3d) placée dans la première étape et au moins une partie de l'isolant thermique sous vide (2, 12, 22, 32) par expansion.

2. Procédé selon la revendication 1,
dans lequel la seconde étape consiste à expanser des perles de préformage de la seconde mousse thermo-isolante (4, 4a, 4b, 4c, 4d) à une température d'expansion supérieure à une température de résistance à la chaleur de la première mousse thermo-isolante (3, 3a, 3b, 3c, 3d), formant ainsi la seconde mousse thermo-isolante (4, 4a, 4b, 4c, 4d) par expansion, dans lequel la température de résistance à la chaleur est la température à laquelle aucune déformation ou décoloration ne se produit dans des conditions sans force.

3. Procédé selon la revendication 1 ou 2,
dans lequel dans des régions de surface de l'isolant thermique sous vide (2, 12, 22, 32) qui comprennent les bords (7) et une partie médiane (8), pour former la seconde mousse thermo-isolante (4, 4a, 4b, 4c, 4d) au niveau d'une partie de la partie médiane (8) adjacente aux bords (7), la seconde étape inclut la mise en place d'un rembourrage (11) sur le reste de la partie médiane (8) et l'expansion des perles de préformage de la seconde mousse thermo-isolante (4, 4a, 4b, 4c, 4d).

4. Procédé selon l'une quelconque des revendications 1 à 3,
dans lequel la seconde mousse thermo-isolante (4, 4a, 4b, 4c, 4d) est formée d'un matériau différent de la première mousse thermo-isolante (3, 3a, 3b, 3c, 3d) par expansion.

5. Procédé selon la revendication 4,
dans lequel la première mousse thermo-isolante (3, 3a, 3b, 3c, 3d) est en polystyrène expansé ; et
dans lequel la seconde mousse thermo-isolante (4, 4a, 4b, 4c, 4d) 4 est en polypropylène expansé.

6. Procédé selon l'une quelconque des revendications 1 à 3,
dans lequel la seconde mousse thermo-isolante (4, 4a, 4b, 4c, 4d) est formée à partir d'un même matériau que la première mousse thermo-isolante (3, 3a, 3b, 3c, 3d) par expansion.

7. Procédé de fabrication d'un chauffe-eau (25),
comprenant une étape consistant à placer l'isolant thermique composite (1, 1a, 1b, 1c, 1d) autour d'un réservoir (20) configuré pour stocker de l'eau chaude, l'isolant thermique composite (1, 1a, 1b, 1c, 1d) étant fabriqué au moyen du procédé de fabrication selon l'une quelconque des revendications 1 à 6.

8. Procédé de fabrication d'un chauffe-eau (25),
comprenant une étape consistant à placer l'isolant thermique composite (1, 1a, 1b, 1c, 1d) autour d'un compresseur (30) configuré pour décharger du fluide frigorigène, l'isolant thermique composite (1, 1a, 1b, 1c, 1d) étant fabriqué par le procédé selon l'une quelconque des revendications 1 à 6.

9. Procédé selon la revendication 7 ou 8,
dans lequel la première étape inclut les opérations consistant à plier la partie soudée (5, 5b, 5c) le long de la périphérie extérieure du noyau (2a, 12a, 22a, 32a) vers un côté de la surface de l'isolant thermique sous vide (2, 12, 22, 32), recouvrir les bords (7) de l'isolant thermique sous vide (2, 12, 22, 32), y compris la partie soudée pliée (5, 5b, 5c), avec la première mousse thermo-isolante (3, 3a, 3b, 3c, 3d), et placer la première mousse thermo-isolante (3, 3a, 3b, 3c, 3d) le long de la périphérie extérieure du noyau (2a, 12a, 22a, 32a), et dans lequel l'étape consistant à placer l'isolant thermique composite (1, 1a, 1b, 1c, 1d) inclut l'opération consistant à placer l'isolant thermique composite (1, 1a, 1b, 1c, 1d) avec une face de l'isolant thermique sous vide (2, 12, 22, 32), qui est sur le côté vers lequel la partie soudée (5, 5b, 5c) est pliée, tournée vers un côté basse température et une autre face de l'isolant thermique sous vide (2, 12, 22, 32) tournée vers un côté haute température.

10. Isolant thermique composite (1, 1a, 1b, 1c, 1d) configuré pour réaliser une isolation thermique en utilisant un isolant thermique sous vide en forme de plaque (2, 12, 22, 32) ayant un intérieur scellé sous vide,
l'isolant thermique composite (1, 1a, 1b, 1c, 1d) comprenant :
- une première mousse thermo-isolante (3, 3a, 3b, 3c, 3d) constituée d'un premier matériau expansible (3, 3a, 3b, 3c, 3d) et placée sur une périphérie extérieure de l'isolant thermique sous vide (2b, 12b) ; et
- une seconde mousse thermo-isolante (4, 4a, 4b, 4c, 4d) constituée d'un second matériau expansible (4, 4a, 4b, 4c, 4d) et configurée pour coupler ensemble la première mousse thermo-isolante (3, 3a, 3b, 3c, 3d) et l'isolant thermique sous vide (2, 12, 22, 32),
dans lequel la seconde mousse thermo-isolante (4, 4a, 4b, 4c, 4d) recouvre la première mousse thermo-isolante (3, 3a, 3b, 3c, 3d) et au moins une partie de l'isolant thermique sous vide (2, 12, 22, 32).

11. Isolant thermique composite (1, 1a, 1b, 1c, 1d) selon la revendication 10, dans lequel la première mousse thermo-isolante (3, 3a, 3b, 3c, 3d) et la seconde mousse thermo-isolante (4, 4a, 4b, 4c, 4d) sont des éléments individuels l'un par rapport à l'autre.

12. Isolant thermique composite (1, 1a, 1b, 1c, 1d) selon l'une quelconque des revendications 10 ou 11,
dans lequel une température d'expansion du second matériau expansible (4, 4a, 4b, 4c, 4d) est supérieure à une température de résistance à la chaleur du premier matériau expansible (3, 3a, 3b, 3c, 3d).
